# FASCICULE DE BREVET EUROPEEN

(11) **EP 2 714 287 B1**
(45) Date de publication et mention de la délivrance du brevet: **28.10.2015**
(21) Numéro de dépôt: 12731035.7
(22) Date de dépôt: 22.05.2012
(51) Int. Cl.: B05B 15/04, B05D 1/32, B05D 7/00

(54) **DISPOSITIF DE MASQUAGE DURANT LE TRAITEMENT D'UNE SURFACE**
MASKIERUNGSVORRICHTUNG ZUR OBERFLÄCHENBEHANDLUNG
SURFACE TREATMENT MASKING DEVICE

(30) Priorité: 24.05.2011 FR 1154501
(43) Date de publication de la demande: 09.04.2014
(73) Titulaire: Marquages Hode, 31020 Toulouse Cedex 2 (FR)
(72) Inventeur: DUBOIS, Philippe, 31880 La Salvetat Saint Gilles (FR)
(74) Mandataire: Fourcade, Emmanuelle
(86) Numéro de dépôt international: PCT/FR2012/051132
(87) Numéro de publication internationale: WO 2012/160305

(56) Documents cités:
- FR-A1- 2 600 917
- US-A- 4 420 520
- US-A1- 2003 035 915
- US-A1- 2004 001 932

## Description

La présente invention appartient au domaine des accessoires utilisés en relation avec l'application de liquides ou d'autres matières fluides sur des surfaces, et plus particulièrement des accessoires pour le masquage d'une zone durant le traitement des surfaces voisines.

Elle a pour objet un dispositif destiné à masquer une partie d'une surface lors d'une opération comportant plusieurs étapes, effectuée sur cette surface, ce dispositif comprenant un masque recouvrant la surface à protéger durant l'opération, et une pluralité de collerettes adhésives amovibles pouvant être retirées successivement. L'invention vise également un procédé de protection des zones non concernées par un traitement des surfaces avoisinantes.

On sait qu'il est indispensable d'assurer la protection des carrosseries métalliques de véhicules, telles que les coques de bateaux, le fuselage des avions, les habitacles des engins de chantier ou autres. De manière générale différentes couches sont appliquées pour obtenir un revêtement satisfaisant en termes d'uniformité et de longévité du revêtement, celui-ci étant soumis à des condition souvent agressives.

Par exemple, la mise en peinture des avions nécessite l'application de trois couches successives, appelées couche primaire, couche intermédiaire et couche de finition. Ce triple revêtement est communément déposé par pulvérisation, dans une des phases finales de fabrication, alors que l'appareil est déjà équipé de ses hublots ou d'autres accessoires. Ceci implique de protéger par des masques de forme adéquate les éléments déjà en place ne devant pas être peints.

Pour ce faire, on utilise durant le traitement des surfaces externes des avions, des cache-hublots, consistant en un masque de forme sensiblement ovale fixé par une bande adhésive sur le pourtour de chaque hublot. A la fin du traitement, le masque est retiré d'un geste, emportant avec lui la peinture déposée à sa surface et laissant à sa périphérie une lisière nette entre la zone peinte et la zone protégée. Ce procédé donne des résultats satisfaisants tant que l'épaisseur du revêtement est mince. Cependant, lorsqu'une épaisseur plus importante est appliquée, on observe un déchirement irrégulier en bordure du masque, le retrait du masque entraînant une partie de la peinture par arrachement. Pour éviter l'arrachement du revêtement à la périphérie du masque, on doit remplacer le masque après le dépôt de chaque couche. En pratique, on laisse le masque en place devant le hublot et on colle une bande amovible le long de sa bordure. On procède en trois étapes. Le cache est d'abord placé devant le hublot, une bande est appliquée sur sa bordure et la couche primaire est appliquée. Puis la bande est retirée, emportant l'excès de primaire. Une nouvelle bande est apposée sur la périphérie du cache, la couche intermédiaire est appliquée, puis la deuxième collerette est retirée, emportant l'excès de revêtement intermédiaire. Une troisième collerette amovible est apposée et la couche de finition est appliquée. Enfin, la troisième collerette est à son tour décollée, ainsi que le cache.

Ces opérations sont toutes réalisées manuellement, et sont bien entendu répétées pour l'ensemble des pièces à protéger (voir par exemple: FR 2600917, US 2004/001932, US 4 420 520, US 2003/0035915).

Sachant qu'un avion peut comporter jusqu'à 200 hublots, on comprend aisément que les manipulations occasionnées sont longues et fastidieuses. Elle exigent en outre une attention et une adresse constante de la part des personnels. Ceci entraîne des coûts et des délais que les industriels souhaiteraient réduire. A ce jour, aucune solution permettant d'alléger ces manipulations contraignantes n'a été proposée.

La présente invention vise à remédier à ces inconvénients, en proposant un masque pré-assemblé, limitant les manipulations à réaliser durant les procédures de traitement des surfaces comportant plusieurs étapes. Un tel dispositif est destiné en premier lieu aux opérations industrielles de traitement de surface nécessitant plusieurs étapes successives, qu'il s'agisse de peinture ou de nettoyage des surfaces. Le dispositif peut être mis en oeuvre dans la construction aérospatiale, mais peut également convenir à d'autres branches d'activité ayant recours au traitement de surface et à la peinture industrielle. On peut citer notamment, l'industrie navale, l'industrie automobile, la construction de machines et équipements industriels et de travaux publics.

Un but de la présente invention est ainsi d'offrir un dispositif de masquage, facile à placer et évitant la pose répétée de bandes de protections. Un autre objectif de l'invention est d'améliorer la netteté des contours du revêtement aux abords des zones non peintes ou non traitées, mais aussi d'obtenir une superposition précise des bordures des différentes couches du revêtement. Il est également recherché que tous les masques d'une série devant être utilisés pour protéger par exemple les hublots d'un même avion, les dimensions du dispositif soient identiques de manière à ce que la taille des zones masquées soit la même. Un autre objectif encore de la présente invention est de faciliter le retrait des éléments de masquage. Il est également recherché un repérage visuel aisé des éléments composant le dispositif.

De manière plus précise, la présente invention a pour objet un dispositif destiné à masquer une partie d'une surface lors d'une opération effectuée en plusieurs étapes sur cette surface, comportant un masque adoptant la forme de ladite partie à masquer, le dispositif comportant :
i) un film dont le contour adopte la forme de ladite partie à masquer et dont la face inférieure est enduite d'une substance adhésive qui est recouverte d'une feuille de protection au moins partiellement amovible,
ii) au moins deux collerettes de protection collées amovibles l'une sur l'autre en bordure de la face supérieure du film, lesdites collerettes comportant une lisère externe qui suit le contour dudit film et qui sont exactement superposées l'une avec l'autre.

Par opération, on entend la réalisation d'un traitement complet d'une surface, qui peut comprendre de dépôt de plusieurs couches de revêtement, ayant diverses fonctions de protection ou de décoration (anti-rouille, peinture colorée, vernis, ...). Peut aussi être visée ici l'application de produits mis en ouvre dans le nettoyage des surfaces (décapage, ponçage, dégraissage, ...).

Les surfaces traitées sont le plus souvent métalliques, mais peuvent aussi bien être constituées d'autres matériaux, tels que des matières plastique synthétiques, du bois, du verre ... Les surfaces à protéger peuvent également être de toute nature, sous réserve que leurs caractéristiques superficielles autorisent une adhésion correcte du masque. Ce point est bien connu de l'homme du métier qui sait adapter les compositions adhésives pour leur conférer le pouvoir collant suffisant au regard de la nature, de la texture et de la forme du support. On note en outre que le terme "surface" inclut les surfaces incurvées comme le sont généralement les fuselages ou les carrosseries, ainsi que les surfaces irrégulières ou gauches, telles que par exemple les éléments de joints entre une carrosserie et une vitre.

Le masque adopte la forme de ladite partie à masquer et comprend un film dont le contour adopte lui-même la forme de ladite partie à masquer. Il s'agit généralement d'un film souple de moins d'un dixième de millimètre. Le contour du film (c'est-à-dire sa limite périphérique) adopte la forme de la partie à masquer sans en avoir obligatoirement la dimension exacte. En effet, comme on le verra plus loin, ladite au moins une collerette peut dépasser du contour du film.

La face inférieure du film est enduite d'une substance adhésive, c'est-à-dire d'un matériau synthétique permettant de faire adhérer deux surfaces sans mouillage. Elle est munie d'une feuille de protection au moins partiellement amovible, qui permet de faire apparaître l'adhésif lorsqu'on souhaite mettre en oeuvre le dispositif de masquage. La feuille de protection est communément une feuille de papier siliconé se détachant aisément du film sans le déchirer.

Il peut être avantageux de ne retirer qu'une partie de la feuille protectrice au moment de l'emploi du dispositif de masquage. Par exemple, pour une utilisation du dispositif de masquage à titre de cache-hublot, on laissera la partie centrale de la feuille de protection associée au film, de sorte que le cache-hublot soit maintenu uniquement par une bande périphérique, sans qu'il adhère sur toute sa surface au hublot. Le retrait du masque à la fin de l'opération, en est ainsi facilité.

Le film et sa feuille de protection (du moins la partie qui n'est pas retirée au moment de l'emploi du dispositif de masquage) constituent la base du masque. Selon l'invention, au moins deux collerettes sont collées de manière amovible l'une sur l'autre en bordure de la face supérieure du film. Lesdites collerettes comportant une lisère externe qui suit le contour dudit film et qui sont exactement superposées l'une avec l'autre.

Le dispositif permet ainsi d'obtenir une superposition précise des bordures des différentes collerettes et un retrait des éléments de masquage sans déchirement irrégulier en bordure ni arrachement d'une partie de la peinture la mise en peinture notamment d'un avion. Malgré l'épaisseur cumulée des trois couches habituellement appliquées (primaire, couche intermédiaire et finition), on arrive à une netteté impeccable des contours du revêtement entre les zones peintes et non peintes, tout en améliorant les critères temps, matière consommée et qualité de finition.

Chaque collerette est constituée d'un bande souple qui peut être de largeur plus ou moins importante, et qui est enduite d'une substance adhésive telle qu'elle peut être décollée par simple traction sans se déchirer elle-même, et sans entraîner le support sur lequel elle est fixée (i.e. la collerette inférieure ou le film). La substance adhésive utilisée doit rester solidaire de la collerette lorsque celle-ci est retirée et ne pas laisser de trace. On peut utiliser par exemple un adhésif acrylique ou à base de caoutchouc naturel. La collerette (ou les collerettes) est réalisée en papier résistant, type papier kraft par exemple, ou en matériau synthétique. De préférence, le matériau de la collerette est également apte à résister au ponçage.

La forme de chaque collerette correspond au contour du masque, de sorte que la lisère externe de chaque collerette suit le contour du film. On entend par là que la lisière externe des collerettes est parallèle au contour du film, sans forcément coïncider avec celui-ci, comme on le verra plus loin. En principe, les collerettes s'étendent sans discontinuer sur toute sa circonférence du masque. On peut cependant réaliser sans difficulté le dispositif de masquage selon l'invention avec des segments de collerettes discontinus pour des applications spécifiques.

Selon une caractéristique avantageuse, le dispositif objet de l'invention comprend trois collerettes, collées amovibles l'une sur l'autre sur la bordure de la face supérieure du film de manière que la lisière externe de chacune des collerettes suit le contour dudit film. On comprend que dans ce cas, le dispositif de masquage est particulièrement utile pour réduire le temps de manipulation, en proportion du nombre d'éléments à protéger et du nombre d'étapes de l'opération à réaliser. La netteté des contours protégés en est également améliorée, puisque les différentes strates du dispositif sont assemblées préalablement, avec la précision de moyens mécaniques automatisés.

De préférence, lesdites collerettes ont une largeur décroissante de sorte qu'elles se recouvrent partiellement, chacune laissant apparaître la lisière interne de la collerette placée immédiatement au-dessous. Cette disposition facilite le retrait individuel de chacune d'elle, au moment voulu, sans provoquer le décollement de la collerette immédiatement au-dessous (ou du masque pour celle qui est en contact direct avec le film). Ce faisant, leur lisière externe reste bien superposée.

De préférence encore, selon l'invention, chaque collerette est munie d'une languette libre, permettant de décoller la collerette par traction sur ladite languette. Cette languette est avantageusement placée sur la lisière interne de la collerette correspondante, de sorte qu'elle ne dépasse pas du masque. Elle est laissée libre, c'est à dire qu'elle n'adhère pas à la strate inférieure, grâce à une pellicule de protection par exemple. On peut donc la soulever et la saisir sans difficulté pour tirer et décoller la collerette qui la porte.

Selon une caractéristique avantageuse du dispositif objet de l'invention, la face inférieure de chaque collerette est enduite d'une substance adhésive, dont le pouvoir collant est croissant de la collerette la plus superficielle à la collerette la plus proche du film. Le pouvoir collant, aussi désigné par l'anglicisme "tack", correspond à la force nécessaire pour séparer un objet (ici une collerette) de son support. On souhaite selon l'invention favoriser le décollement d'une seule collerette à la fois. Le pouvoir collant doit être choisi dans une gamme de valeurs, et peut varier en fonction de l'étendue des surfaces à dissocier, de l'épaisseur de la couche d'adhésif et de la résistance des matériaux encollés. Les propriétés des substances adhésives sont bien connues de l'homme du métier qui saura choisir dans le catalogue des produits offerts par les fabricants spécialisés, une gamme d'adhésifs de compositions adéquates en fonction des caractéristiques du dispositif de masquage mis en oeuvre. On peut par exemple utiliser des substances adhésives dont le pouvoir collant est compris entre 3,0 N/cm et 5,0 N/cm.

En outre, de préférence selon l'invention, les collerettes ont chacune une couleur différente. Ceci permet de bien les différencier et de repérer d'un simple coup d'oeil l'avancement du traitement de surface engagé. L'opérateur peut ainsi apprécier instantanément si une collerette a déjà été retirée, ou si elle doit encore l'être. On évite ainsi les erreurs de manipulation.

Par ailleurs, comme on l'a mentionné plus haut, les surfaces devant être protégées durant les opérations de traitement des surfaces voisines ne sont pas toujours planes et lisses, de sorte que l'adhésif n'a pas de prise sur elles. Il est cependant nécessaire de les protéger de la peinture, comme c'est le cas des joints de hublots par exemple. C'est pourquoi le dispositif selon l'invention a été conçu en deux versions, l'une permettant de protéger une surface au contour exact du film adhésif, et l'autre permettant de protéger une marge supplémentaire autour du film.

Ainsi, dans un premier mode de réalisation particulier du dispositif selon la présente invention, la lisière externe des collerettes suit le contour du film en coïncidant exactement avec celui-ci. Dans ce cas, les contours du film et des collerettes se superposent au niveau de la limite entre la zone devant être traitée et la zone protégée. Le film a la même dimension que la zone masquée.

Dans un mode de réalisation alternatif de l'invention, la lisière externe des collerettes suit le contour du film en dépassant de celui-ci sur une largeur de 0,5 mm à 3 mm. Cette marge libre vient ainsi recouvrir le joint périphérique du hublot sur lequel il est difficile de faire adhérer le masque. Dans ce cas, la feuille de protection de la face inférieure du masque s'étend jusqu'à la limite externe desdites collerettes. Lorsque la feuille de protection (ou une partie de celle-ci) sera retirée pour mettre le masque en place, seront dénudés, non seulement une partie de la face inférieure du film adhésif mais aussi la marge libre non adhésive jouant le rôle de couvre-joint. Le film a une dimension moindre que la zone masquée.

On remarque que dans ce dernier cas, il est nécessaire que le dispositif de masquage comporte autant de collerettes que de couches de revêtement à appliquer durant l'opération de traitement de surface. Au contraire, dans le premier mode de réalisation, le contour du film peut jouer le rôle d'une ultime collerette, puisqu'il en a la dimension. On peut donc utiliser un dispositif de masquage comprenant une collerette de moins qu'il n'y a d'étapes à réaliser dans l'opération de traitement.

De manière commode, dans le dispositif selon l'invention, la feuille de protection du film comporte au moins une prédécoupe divisant ladite feuille en zones distinctes pouvant être dissociées du film séparément l'une de l'autre. En particulier, on peut par une prédécoupe, séparer une zone périphérique de la feuille de protection. Dans ce cas, seule la zone périphérique sera dégarnie de sa protection et se collera à la surface à protéger. Le masque n'adhérera donc pas sur toute sa surface et son retrait à la fin de l'opération en sera facilité. De manière avantageuse, on peut en plus créer des prédécoupes radiales divisant la zone périphérique en plusieurs segments. Par exemple, on peut créer deux prédécoupes radiales à 10 ou 20 cm l'une de l'autre sur la zone périphérique, ce qui permet de dénuder dans un premier temps seulement un court segment, de placer le masque devant la surface à protéger, et de vérifier son positionnement correct avant de dénuder le reste de la zone périphérique et de l'appliquer à la surface.

Le dispositif décrit plus haut peut être commodément utilisé pour protéger des éléments divers, de différentes formes. L'homme du métier saura définir les dimensions adéquates du masque en fonction des éléments devant être masqués durant le traitement des surfaces voisines. Notamment, selon la présente invention, le masque peut adopter la forme d'un hublot, d'une fenêtre de véhicule, d'un pare-brise.

Le dispositif qui vient d'être décrit est adapté à un emploi dans différents cas de figure, et en particulier pour tout traitement de surface comportant plusieurs applications d'un revêtement de protection et/ou d'un produit nettoyant ne devant être appliqué que sur une partie de ladite surface. Il pourra donc être mis en oeuvre selon une méthode, qui fait partie intégrante de la présente invention.

Est ainsi objet de la présente invention, un procédé de masquage d'une partie d'une surface durant une opération effectuée en plusieurs étapes sur cette surface, qui comprend essentiellement les actions consistant à :
a)- se munir d'un masque dont le contour adopte la forme de ladite partie à masquer, comportant :
   i) un film et dont la face inférieure est enduite d'une substance adhésive et recouverte d'une feuille de protection au moins partiellement amovible,
   ii) au moins deux collerettes de protection collées amovibles l'une sur l'autre en bordure de la face supérieure du film, lesdites collerettes comportant une lisère externe exactement superposée l'une avec l'autre qui suit le contour dudit film,
b)- retirer au moins une partie de la feuille de protection pour dénuder la face adhésive correspondante du film et l'appliquer sur la surface à masquer,
c)- effectuer la première étape de ladite opération,
d)- retirer une première collerette,
e)- répéter les actions c) et d),
f)- retirer le film de la surface.

Selon une caractéristique intéressante du procédé selon l'invention, les actions c) et d) sont répétées au moins une fois. C'est dans ce cas que le procédé prend tout son intérêt, puisque le nombre de manipulations sera réduit en proportion du nombre de masques utilisés, et sera d'autant plus significatif. Bien entendu, on choisira judicieusement un dispositif comportant autant de bandes collerettes qu'il y a d'étapes dans l'opération à réaliser.

Comme indiqué précédemment, le dispositif objet de l'invention et son mode de mise en oeuvre sont destinés à une utilisation dans différents domaines d'activité, imposant de déposer plusieurs couches de revêtement ou d'appliquer plusieurs substances. C'est pourquoi dans le procédé selon l'invention, l'opération effectuée sur ladite surface peut être la mise en peinture ou le nettoyage d'un avion, d'un bateau, d'un véhicule automobile, d'un équipement industriel ou de travaux publics. Les véhicules et équipements peuvent être neufs ou non, pour un changement de décoration par exemple.

La présente invention sera mieux comprise, et des détails en relevant apparaîtront, grâce à la description qui va être faite d'une de ses variantes de réalisation, en relation avec les figures annexées, dans lesquelles :
La fig.1 est une vue de dessus d'un dispositif de masquage selon l'invention.
La fig. 2 est une vue de dessous d'un dispositif de masquage selon l'invention.
La fig. 3 est une vue en coupe selon le plan I-I du même dispositif.

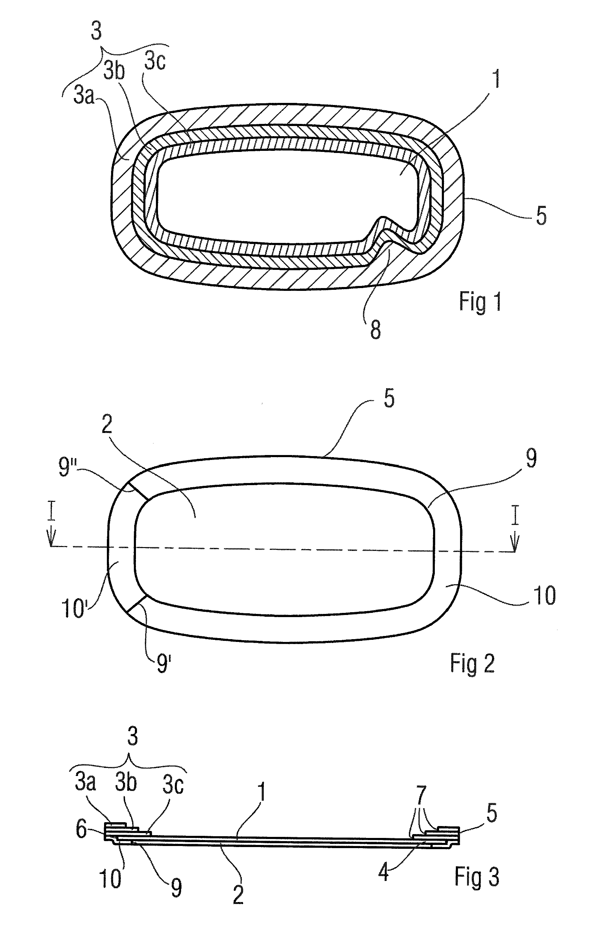

Dans le mode de réalisation particulier qui est présenté sur les figures 1, 2 et 3, le dispositif de masquage est formé d'une base comprenant le film 1 et la feuille de protection 2. Sur la plage en bordure 4 de la face supérieure du film 1, sont placées trois collerettes 3a, 3b et 3c, dont la lisère externe 5 suit le contour 6 du film 1.

Le film 1 est réalisé en vinyle, avec une masse adhésive de 85 µm d'épaisseur. Sa face inférieure est enduite d'une substance adhésive, à savoir un composé acrylique enlevable. La feuille de protection 2 protège la surface adhésive jusqu'au moment où le masque va être utilisé. Elle est en papier siliconé (papier kraft blanc stable de 130 µm), et se détache aisément du film 1. Elle est partiellement amovible : la prédécoupe 9 permet de retirer uniquement la zone périphérique 10 de la feuille 2 pour faire apparaître l'adhésif déposé sur le film qui va fixer le masque sur la surface à traiter. La partie centrale de la feuille 2 reste en place au dos du film 1, de sorte que ce dernier n'adhère pas à la surface à traiter. Le masque sera ainsi plus facile à retirer à la fin du processus. On note en outre que la zone périphérique 10 comporte les deux prédécoupes radiales 9' et 9", délimitant un segment 10', qui peut être retiré indépendamment du reste de la zone 10.

Les collerettes 3a, 3b et 3c sont collées de manière amovible sur la plage en bordure 4 de la face supérieure du film 1. Chaque collerette est constituée d'un bande en PVC souple, qui est enduite d'une substance adhésive. Elles ont chacune une couleur différente et s'étendent sans discontinuer sur toute la bordure du masque. Elles ont une largeur décroissante de sorte qu'elles ne se recouvrent que partiellement, chacune laissant apparaître la lisière interne de la collerette placée immédiatement au-dessous. Chaque collerette comporte en extension de sa lisière interne une languette 8. Cette languette 8 est libre : elle n'adhère pas à la strate inférieure et peut être facilement saisie pour décoller la collerette à laquelle elle appartient par simple traction.

La face inférieure de chaque collerette est enduite d'une substance adhésive, dont le pouvoir collant est croissant de la collerette la plus superficielle 3a à la collerette la plus proche du film 3c. Il est respectivement de 3,4 N/cm, 3,8 N/cm et 4,0 N/cm.

La forme des collerettes 3a, 3b et 3c correspond au contour du masque, de sorte que la lisère externe 5 de chaque collerette suit le contour 6 du film 1, mais sans coïncider avec celui-ci. Dans le présent exemple, en effet, la lisière externe des collerettes suit le contour 6 du film 1 en dépassant de celui-ci sur une largeur d'environ 2 mm. Dans ce cas, la zone périphérique 10 de la feuille de protection 2 de la face inférieure du masque s'étend jusqu'à la limite externe 5 des collerettes. Le film 1 a donc une dimension moindre que la zone masquée.

Le dispositif décrit plus haut a la forme d'un hublot. Il peut par exemple être utilisé pour protéger les hublots et leur joint lors de l'opération de mise en peinture à la fin de la fabrication d'un avion ou lors d'une remise en peinture. Cette opération comporte l'application d'un revêtement primaire, d'une couche intermédiaire et d'une couche de finition.

Dans ce cas, on procède comme suit :
On se munit d'un dispositif de masquage tel que décrit précédemment, avec ses trois collerettes 3a, 3b et 3c. On retire tout d'abord le segment 10' de la zone périphérique 10 de la feuille de protection 2 pour dénuder la face adhésive correspondante. On place le masque devant la surface à protéger et on vérifie son placement correct. Puis on retire le reste de la zone périphérique 10 pour dénuder dans sa totalité la zone adhésive périphérique et on la fixe sur la surface à masquer, en l'occurrence sur le pourtour du hublot. On applique le revêtement primaire qui constitue la première étape de l'opération de peinture. Puis, on tire sur la première languette 8 pour retirer la première collerette 3a qui est maculée de primaire. La deuxième collerette 3b est alors entièrement visible. On applique maintenant la couche intermédiaire et on retire la deuxième collerette 2b, emportant l'excès de revêtement intermédiaire ayant débordé sur celle-ci et découvrant la totalité de la troisième collerette 3c. La couche de finition est alors appliquée, puis la troisième collerette est décollée. Enfin, on retire le masque.

Ce processus est identique pour chaque hublot ménagé sur le fuselage de l'appareil.

## Revendications

1. Dispositif destiné à masquer une partie d'une surface lors d'une opération effectuée en plusieurs étapes sur cette surface, comportant un masque adoptant la forme de ladite partie à masquer, **caractérisé en ce qu'**il comprend
i) un film (1) dont le contour (6) adopte la forme de ladite partie à masquer et dont la face inférieure est enduite d'une substance adhésive qui est recouverte d'une feuille de protection (2) au moins partiellement amovible,
ii) au moins deux collerettes de protection (3) collées amovibles l'une sur l'autre en bordure (4) de la face supérieure du film (1), lesdites collerettes comportant chacune une lisère externe (5) qui suit le contour (6) dudit film de sorte que lesdites lisières sont exactement superposées l'une avec l'autre.

2. Dispositif selon la revendication 1, **caractérisée en ce qu'**il comprend trois collerettes de protection (3), collées amovibles l'une sur l'autre en bordure (4) de la face supérieure du film (1).

3. Dispositif selon l'une des revendications précédentes, **caractérisé en ce que** lesdites collerettes (3) ont une largeur décroissante de sorte qu'elles se recouvrent partiellement, chacune laissant apparaître la lisière interne (7) de la collerette placée immédiatement au-dessous.

4. Dispositif selon l'une des revendications précédentes, **caractérisé en ce que** au moins une collerette (3) est munie d'une languette libre (8), permettant de décoller ladite collerette par traction sur ladite languette.

5. Dispositif selon l'une des revendications précédentes, **caractérisé en ce que** la face inférieure de chaque collerette (3) est enduite d'une substance adhésive enlevable, dont le pouvoir collant est croissant de la collerette la plus superficielle à la collerette la plus proche du film (1).

6. Dispositif selon l'une des revendications précédentes, **caractérisé en ce que** les collerettes (3) ont chacune une couleur différente.

7. Dispositif selon l'une des revendications 1 à 6, **caractérisé en ce que** la lisière externe (5) desdites collerettes (3) suit le contour (6) du film (1) en coïncidant exactement avec celui-ci.

8. Dispositif selon l'une des revendications 1 à 6, **caractérisé en ce que** la lisière externe (5) de lesdites collerettes (3) suit le contour (6) du film (1) en dépassant de celui-ci sur une largeur de 0,5 mm à 3 mm.

9. Dispositif selon l'une quelconque des revendications précédentes, **caractérisé en ce que** la feuille de protection (2) du film (1) comporte au moins une prédécoupe (9) divisant ladite feuille en zones distinctes pouvant être dissociées du film (1) séparément.

10. Dispositif selon l'une des revendications précédentes, **caractérisé en ce que** le masque adopte la forme d'un hublot, d'une fenêtre dé véhicule, d'un pare-brise.

11. Procédé de masquage d'une partie d'une surface durant une opération effectuée en plusieurs étapes sur cette surface, **caractérisé en ce qu'**il comprend essentiellement les actions consistant à :
a)- se munir d'un masque dont le contour (6) adopte la forme de ladite partie à masquer selon l'une des revendications précédentes, comportant :
i) un film (1) et dont la face inférieure est enduite d'une substance adhésive et recouverte d'une feuille de protection (2) au moins partiellement amovible,
ii) au moins deux collerettes de protection (3) collées amovibles l'une sur l'autre en bordure (4) de la face supérieure du film (1), lesdites collerettes comportant chacune une lisère externe (5) qui suit le contour (6) dudit film de sorte que lesdites lisières sont exactement superposées l'une avec l'autre,
b)- retirer au moins une partie de la feuille de protection (2) pour dénuder la face adhésive correspondante du film (1) et l'appliquer sur la surface à masquer,
c)- effectuer une première étape de ladite opération,
d)- retirer une première collerette (3),
e)- répéter les actions c) et d),
f)- retirer le film (1) de la surface.

12. Procédé selon la revendication précédente **caractérisé en ce que**, à l'étape a) on choisit un masque comprenant autant de collerettes qu'il y a d'étapes dans l'opération à réaliser, et on répète les actions c) et d) autant de fois.

13. Procédé selon la revendication précédente **caractérisé en ce que** l'opération effectuée sur ladite surface est la mise en peinture ou le nettoyage d'un avion, d'un bateau, d'un véhicule automobile, d'un équipement industriel ou de travaux publics.

## Patentansprüche

1. Vorrichtung, die dazu bestimmt ist, einen Teil einer Oberfläche bei einer Operation, die in mehreren Schritten auf dieser Oberfläche durchgeführt wird, zu maskieren, die eine Maske aufweist, die die Form des zu maskierenden Teils annimmt, **dadurch gekennzeichnet, dass** sie Folgendes aufweist:
i) einen Film (1), dessen Kontur (6) die Form des zu maskierenden Teils annimmt und dessen Unterseite mit einer Klebesubstanz beschichtet ist, die mit einer Schutzfolie (2) bedeckt ist, die mindestens teilweise entfernbar ist,
ii) mindestens zwei Schutzkragen (3), die entfernbar am Rand (4) der Oberseite des Films (1) aufeinander geklebt sind, wobei die Kragen jeweils einen Außenrand (5) aufweisen, der der Kontur (6) des Films folgt, so dass die Ränder genau übereinander gelagert sind.

2. Vorrichtung nach Anspruch 1, **dadurch gekennzeichnet, dass** sie drei Schutzkragen (3) aufweist, die entfernbar am Rand (4) der Oberseite des Films (1) aufeinander geklebt sind.

3. Vorrichtung nach einem der vorhergehenden Ansprüche, **dadurch gekennzeichnet, dass** die Kragen (3) eine abnehmende Breite aufweisen, so dass sie teilweise den Innenrand (7) des Kragens, der unmittelbar darunter angeordnet ist, erscheinen lassen.

4. Vorrichtung nach einem der vorhergehenden Ansprüche, **dadurch gekennzeichnet, dass** mindestens ein Kragen (3) mit einer freien Lasche (8) ausgestattet ist, wodurch der Kragen durch Ziehen an der Lasche abgezogen werden kann.

5. Vorrichtung nach einem der vorhergehenden Ansprüche, **dadurch gekennzeichnet, dass** die Unterseite jedes Kragens (3) mit einer entfernbaren Klebesubstanz beschichtet ist, deren Klebrigkeit von dem äußersten Kragen zu dem Kragen, der dem Film (1) am nächsten liegt, zunimmt.

6. Vorrichtung nach einem der vorhergehenden Ansprüche, **dadurch gekennzeichnet, dass** die Kragen (3) jeweils eine unterschiedliche Farbe aufweisen.

7. Vorrichtung nach einem der Ansprüche 1 bis 6, **dadurch gekennzeichnet, dass** der Außenrand (5) der Kragen (3) der Kontur (6) des Films (1) folgt, indem er genau mit dieser zusammenfällt.

8. Vorrichtung nach einem der Ansprüche 1 bis 6, **dadurch gekennzeichnet, dass** der Außenrand (5) der Kragen (3) der Kontur (6) des Films (1) folgt, indem er von dieser über eine Breite von 0,5 mm bis 3 mm vorsteht.

9. Vorrichtung nach einem der vorhergehenden Ansprüche, **dadurch gekennzeichnet, dass** die Schutzfolie (2) des Films (1) mindestens einen Vorschnitt (9) aufweist, der die Folie in getrennte Bereiche teilt, die separat von der Folie (1) abgetrennt werden können.

10. Vorrichtung nach einem der vorhergehenden Ansprüche, **dadurch gekennzeichnet, dass** die Maske die Form eines Bullauges, eines Fahrzeugfensters, einer Windschutzscheibe annimmt.

11. Verfahren zur Maskierung eines Teils einer Oberfläche bei einer Operation, die in mehreren Schritten auf dieser Oberfläche durchgeführt wird, **dadurch gekennzeichnet, dass** es im Wesentlichen die Schritte umfasst, die darin bestehen:
a) sich mit einer Maske auszustatten, deren Kontur (6) die Form des zu maskierenden Teils nach einem der vorhergehenden Ansprüche annimmt, umfassend:
i) einen Film (1) und dessen Unterseite mit einer Klebesubstanz beschichtet ist und mit einer Schutzfolie (2) bedeckt ist, die mindestens teilweise entfernbar ist,
ii) mindestens zwei Schutzkragen (3), die entfernbar am Rand (4) der Oberseite des Films (1) aufeinander geklebt sind, wobei die Kragen jeweils einen Außenrand (5) aufweisen, der der Kontur (6) des Films folgt, so dass die Ränder genau übereinander gelagert sind,
b) mindestens einen Teil der Schutzfolie (2) abzuziehen, um die entsprechende Klebeseite des Films (1) freizulegen und sie auf die zu maskierende Oberfläche zu applizieren,
c) mindestens einen ersten Schritt der Operation durchzuführen,
d) einen ersten Kragen (3) zu entfernen,
e) die Schritte c) und d) zu wiederholen,
f) den Film (1) von der Oberfläche abzuziehen.

12. Verfahren nach dem vorhergehenden Anspruch, **dadurch gekennzeichnet, dass** in Schritt a) eine Maske ausgewählt wird, die so viele Kragen aufweist, wie es Schritte in der durchzuführenden Operation gibt, und die Schritte c) und d) ebenso viele Male wiederholt werden.

13. Verfahren nach dem vorhergehenden Anspruch, **dadurch gekennzeichnet, dass** die Operation, die auf der Oberfläche durchgeführt wird, das Lackieren oder das Reinigen eines Flugzeugs, eines Schiffes, eines Automobils, einer Industrieanlage oder von Tiefbauten ist.

## Claims

1. Device intended to mask a part of a surface in an operation performed in a number of steps on this surface, comprising a mask adopting the form of said part to be masked, **characterized in that** it comprises
i) a film (1), the outline (6) of which adopts the form of said part to be masked and the bottom face of which is coated with an adhesive substance which is covered by an at least partially removable protective sheet (2),
ii) at least two protective trims (3) removably glued one on top of the other at the border (4) of the top face of the film (11), said trims each comprising an outer edge (5) which follows the outline (6) of said film, such that said edges are exactly superposed relative to one another.

2. Device according to Claim 1, **characterized in that** it comprises three protective trims (3), removably glued one on top of the other at the border (4) of the top face of the film (1).

3. Device according to one of the preceding claims, **characterized in that** said trims (3) have a decreasing width such that they partially cover one another, each letting the inner edge (7) of the trim placed immediately below appear.

4. Device according to one of the preceding claims, **characterized in that** at least one trim (3) is provided with a free tongue (8) making it possible to unglue said trim by pulling on said tongue.

5. Device according to one of the preceding claims, **characterized in that** the bottom face of each trim (3) is coated with a removable adhesive substance, the gluing power of which increases from the top trim to the trim closest to the film (1).

6. Device according to one of the preceding claims, **characterized in that** the trims (3) each have a different colour.

7. Device according to one of Claims 1 to 6, **characterized in that** the outer edge (5) of said trims (3) follows the outline (6) of the film (1) by exactly coinciding therewith.

8. Device according to one of Claims 1 to 6, **characterized in that** the outer edge (5) of said trims (3) follows the outline (6) of the film (1) by extending beyond the latter over a width of 0.5 mm to 3 mm.

9. Device according to any one of the preceding claims, **characterized in that** the protective sheet (2) of the film (1) comprises at least one scoring (9) dividing said sheet into distinct zones that can be detached from the film (1) separately.

10. Device according to one of the preceding claims, **characterized in that** the mask adopts the form of a circular window, a vehicle window, a windshield.

11. Method for masking a part of a surface during an operation performed in a number of steps on this surface, **characterized in that** it essentially comprises the actions consisting in:
a)- obtaining a mask, the outline (6) of which adopts the form of said part to be masked, according to one of the preceding claims, comprising:
i) a film (1), the bottom face of which is coated with an adhesive substance and covered with an at least partially removable protective sheet (2),
ii) at least two protective trims (3) removably glued one on top of the other at the border (4) of the top face of the film (1), said trims each comprising an outer edge (5) which follows the outline (6) of said film such that said edges are exactly superposed relative to one another,
b)- removing at least a part of the protective sheet (2) to strip the corresponding adhesive face of the film (1) and apply it to the surface to be masked,
c)- performing a first step of said operation,
d)- removing a first trim (3),
e)- repeating the actions c) and d),
f)- removing the film (1) from the surface.

12. Method according to the preceding claim, **characterized in that**, in the step a), a mask is chosen that comprises as many trims as there are steps in the operation to be performed, and the actions c) and d) are repeated that many times.

13. Method according to the preceding claim, **characterized in that** the operation performed on said surface is the painting or the cleaning of an aeroplane, of a boat, of a motor vehicle, of an industrial equipment item or of public works.
